# EUROPEAN PATENT SPECIFICATION

(11) **EP 3 022 092 B1**
(45) Date of publication and mention of the grant of the patent: **11.12.2019**
(21) Application number: 14826707.3
(22) Date of filing: 24.06.2014
(51) Int. Cl.: B60R 19/20, B60W 30/10, B62D 53/08, B60R 21/20

(54) **DEVICE AND METHOD FOR CONTROLLING COLLISION PROCESSES IN A VEHICLE CONVOY**
VORRICHTUNG UND VERFAHREN ZUR STEUERUNG VON KOLLISIONSVERFAHREN IN EINEM FAHRZEUGKONVOI
DISPOSITIF ET PROCÉDÉ DE COMMANDE DE PROCESSUS DE COLLISION DANS UN CONVOI DE VÉHICULES

(30) Priority: 17.07.2013 SE 1350891
(43) Date of publication of application: 25.05.2016
(73) Proprietor: Scania CV AB, 151 87 Södertälje (SE)
(72) Inventor: SOKALLA, Marek, 152 30 Södertälje (SE); AL ALAM, Assad, 121 31 Enskededalen (SE)
(74) Representative: Scania CV AB
(86) International application number: PCT/SE2014/050777
(87) International publication number: WO 2015/009216

(56) References cited:
- WO-A1-2006/106009
- WO-A2-2006/081218
- DE-A1-102008 000 783
- US-A- 5 042 858
- US-A1- 2003 167 113
- US-A1- 2004 049 331
- US-A1- 2008 097 699
- US-A1- 2010 059 972
- US-A1- 2011 054 741
- US-A1- 2013 096 780
- US-B1- 6 416 093

## Description

### TECHNICAL FIELD OF THE INVENTION

The present invention concerns a method for controlling a collision process in a vehicle convoy. The invention also concerns a computer program product containing program code for a computer for implementing a method according to the invention. The invention also concerns a device for controlling a collision process in a vehicle convoy and a motor vehicle that is equipped with the device.

### BACKGROUND

Air resistance during travel is a factor that affects fuel consumption in current vehicles, particularly e.g. goods vehicles and other relatively large vehicles that have a large frontal area.

The air resistance on a trail vehicle depends in large measure on its distance from the front vehicle. In principle it may be said that the shorter the distance to a front vehicle, the lower the air resistance, with the result that the fuel consumption of the trail vehicle can be reduced. In those cases where two or more vehicles are included in a so-called vehicle convoy, i.e. a number of vehicles that are driving with short distances between them and traveling as a unit, the fuel consumption of said vehicles can be reduced by, e.g. 5-15%. Driving vehicles in a vehicle convoy can thus reduce fuel costs fairly significantly.

One disadvantage of driving vehicles close behind a lead vehicle is that the view may be obscured. In cases where a vehicle is driven relatively close to a lead goods vehicle with a covered trailer, the visibility may severely limited. This can cause discomfort to the driver of the trail vehicle. Furthermore, a driver in the trail vehicle may derive a limited understanding as to why automatic maneuvers of the vehicle are being performed. This can pertain, for example, to automatic braking or automatic gear shifting of the transmission in the trail vehicle.

The limited visibility can result in a greater risk of accidents, including because the perceptive capacity of the driver is thereby reduced. Furthermore, an erroneous determination can be made in the automatic vehicle control systems used to maintain the distance to a front vehicle, which can cause one or a plurality of vehicles to come into contact, i.e. a minor collision. This is naturally undesirable for many different reasons.

In a case in which a vehicle in the vehicle convoy is forced to perform very severe braking, one or a plurality of trail vehicles in the vehicle convoy can come to collide with the lead vehicle, possibly in the form of a chain collision. This would naturally entail many different problems and pose a hazard to other vehicles at the collision site.

DE 19933782 describes a warning system for warning trail vehicles that the risk of collision is present.

EP 1992538 describes a warning system for warning trail vehicles that a risk of collision is present.

US 2011048835 and US20040049331 describe a protective system for vehicles involving external airbags.

### SUMMARY OF THE INVENTION

One object of the present invention is to provide a new and advantageous method for controlling a collision process in a vehicle convoy.

Another object of the invention is to provide a new and advantageous device and a new and advantageous computer program for controlling a collision process in a vehicle convoy.

Yet another object of the invention is to provide a method, a device and a computer program for achieving greater traffic safety in vehicle convoys.

Yet another object of the invention is to provide a method, a device and a computer program for achieving a reduction in injuries to people and damage to vehicles in a collision between vehicles in a vehicle convoy.

Yet another object of the invention is to provide a method, a device and a computer program for reducing the collision risk for other vehicles at the collision site in the event of a collision between vehicles in a vehicle convoy.

Yet another object of the invention is to provide an alternative method, an alternative device and an alternative computer program for controlling a collision process in a vehicle convoy.

These objects are achieved by means of a method according to claim 1.

According to one aspect of the invention, a method is provided for controlling a collision process in a vehicle convoy comprising at least two vehicles, of which at least one vehicle is a lead vehicle and at least one vehicle is a trail vehicle. The method comprises the step of:
- in the event of a identified collision risk, controlling the triggering of an airbag configuration that is arranged so as to be controllably triggerable for an external effect, with which airbag configuration at least one of said vehicles is equipped for controlling said collision process.

The vehicle convoy thus comprises at least two vehicles, of which at least one vehicle is a lead vehicle and at least one vehicle is a trail vehicle. Said collision can occur between a lead vehicle and another vehicle up ahead that is not included in the vehicle convoy. Said collision can occur between said lead vehicle and an object up ahead. Said collision can occur between a trail vehicle and another vehicle behind it that is not included in the vehicle convoy. Said collision can occur between said trail vehicle and an object behind it. Said collision can occur between said lead vehicle and a trail vehicle that is included in the vehicle convoy. Said collision can occur between two or more vehicles included in the vehicle convoy. Said collision can occur between at least one of the vehicles involved in said vehicle convoy and at least one object or vehicle external to said vehicle.

According to one aspect of the invention, a method is provided in which a lead vehicle or another "authorized" vehicle can determine that a collision between at least two vehicles in the vehicle convoy is likely to occur. "Authorized" vehicle refers to a vehicle that can make the assessment in order to determine whether a collision between two vehicles in the vehicle convoy is likely to occur. It can be a vehicle that is included in the vehicle convoy and has been ordered to make such a decision. It can also be a vehicle that would be affected by the predicted collision

If a collision is calculated as imminent, external airbags are triggered at the front and rear, or only at the front, or only at the rear of at least one of said vehicles in order to mitigate any damage or injuries that could be sustained by the drivers or the vehicles. According to the invention, this occurs in a coordinated fashion by means of wireless information exchanged between the vehicles. The method calculates not only whether the external airbags on the goods vehicle are to be triggered, but also how. Using appropriate sensor configurations, such as a video camera or radar unit on at least one vehicle in the vehicle convoy (e.g. the lead vehicle), the method can determine which part of an airbag is to be filled with the most air, or which airbags are to be triggered. Variable cushioning between the contact surfaces of the vehicles is thereby advantageously provided. The proposed method can ensure that contact surfaces between vehicles or within vehicles (e.g. between a cab and a trailer) are designed so that, for example, a jackknife effect does not occur, or the vehicles do not bump one another off the road when the collision occurs.

Vehicles that are better and safer in a number of respects are thus provided. Damage to the vehicles in the event of a collision can be reduced or even eliminated. Greater safety of both drivers and passengers in vehicles in the vehicle convoy and of other drivers is hereby achieved. This also entails a less stressful environment for all concerned.

The method can comprise the step of:
- controlling said collision process so as to maintain an essentially mutual longitudinal orientation of said vehicles during said collision.
The effect of the vehicles not included in the prevailing traffic is thereby minimized. Improved traffic safety is thus advantageously achieved.

The method can further comprise the step of:
- providing said at least one vehicle with airbag elements disposed at the front of the vehicle cab and, if a trailer is present, at the front of said trailer and rear of said trailer. The effect of vehicle convoy vehicles involved in the collision is thereby minimized.

The method can comprise the step of:
- triggering at least certain of said airbag elements in mutually independent simultaneous fashion, or in sequence. A flexible method wherein control of a collision process can be controlled very precisely is achieved thereby.

The method can comprise the step of:
- triggering said airbag configuration so as to create a contact profile that forms an angle with the transverse direction of the vehicle. A flexible method wherein control of a collision process can be controlled very precisely is thus achieved.

The method can comprise the step of:
- controlling the triggering of said airbag configuration based on at least one of the parameters comprising driving characteristics, vehicle properties and ambient conditions of said vehicles.

The method can comprise the step of:
- controlling the triggering of said airbag configuration based on how the control unit determines what part of the vehicle will be most exposed in the collision.

The method is associated with short delays with respect to the transferred information. The method is also simple and inexpensive to install in vehicles. According to one embodiment, information concerning a collision risk is transferred from one vehicle in the vehicle convoy to one or a plurality of vehicles in the vehicle convoy. According to one embodiment, information concerning driving characteristics, vehicle properties, ambient conditions and collision parameters is transferred from one vehicle in the vehicle convoy or one or a plurality of vehicles in the vehicle convoy.

The method is easy to implement in existing motor vehicles. Software for controlling a collision process in a vehicle convoy according to the invention can be installed in a control unit in the vehicle during its manufacture. A purchaser of the vehicle can thus be given opportunity to choose the method function as an option. Software containing program code for performing the innovative method can alternatively be installed in a control unit in the vehicle during upgrading at a service station. In this case the software can be loaded into a memory in the control unit. Implementation of the innovative method is thus cost-effective.

Software containing program code for transferring route information can easily be updated or replaced. Furthermore, different parts of the software containing program code for controlling a collision process in a vehicle convoy can be replaced independently of one another. This modular configuration is advantageous from a maintenance perspective.

According to one aspect of the present invention, the device of claim 7 is provided for controlling a collision process in a vehicle convoy comprising at least two vehicles, of which at least one vehicle is a lead vehicle and at least one vehicle is a trail vehicle.

The device comprises:
- an airbag configuration controllably arranged for an external effect; and
- elements adapted so as to control, in connection with a identified collision risk, the triggering of said airbag configuration in order to control said collision process.

The device can comprise:
- elements adapted so as to control said collision process so as to maintain an essentially mutual longitudinal orientation of said vehicles in said collision.

Said airbag configuration can comprise airbag elements disposed at the front of the vehicle cab and at the rear of the vehicle cab and, if a trailer is present, at the front of said trailer and at the rear of said trailer.

The device can comprise:
- elements adapted so as to trigger at least certain of said airbag elements in mutually independently simultaneous fashion, or in sequence.

The device can comprise:
- elements adapted so as to trigger said airbag configuration so as to create a contact profile that forms an angle with the transverse direction of the vehicle.

The device can comprise:
- elements adapted so as to control the triggering of said airbag configuration based on at least one of the parameters comprising driving characteristics, vehicle properties and ambient conditions of said vehicles.

The device can comprise:
- elements adapted so as to control the triggering of said airbag configuration based on which part of the vehicle the control unit determines will be most exposed in the collision.

According to one aspect of the invention, simple aftermarket installation of said device can be performed. Existing vehicles can thus be upgraded in a rapid and relative inexpensive way. The necessary software can be installed easily in a control unit in the vehicle and/or a portable computer that is connectable to a network in the vehicle.

The foregoing objects are also achieved by means of a motor vehicle that contains the device for controlling a collision process in a vehicle convoy according to the invention. The motor vehicle can be a goods vehicle, bus or car.

According to one aspect of the invention, a computer program is provided for controlling a collision process in a vehicle convoy, wherein said computer program contains program code stored on a computer-readable medium for causing an electronic control unit or another computer connected to the electronic control unit to perform the steps according to any of claims 1-6.

According to one aspect of the invention, a computer program is provided for controlling a collision process in a vehicle convoy, wherein said computer program contains program code for causing an electronic control unit or another computer connected to the electronic control unit to perform the steps according to any of claims 1-6. According to one aspect of the invention, a computer program is provided containing a program code stored on a computer-readable medium for performing the method steps according to any of claims 1-6 when said program code is run on an electronic control unit or another computer connected to the electronic control unit.

Additional objects, advantages and new features of the present invention will be made apparent to one skilled in the art by the following details, and through exercising the invention. While the invention is described below, it should be evident that the invention is not limited to the specifically described details. One skilled in the art who has access to the teaching herein will recognize additional applications, modifications and incorporations in other areas, which are within the scope of the invention.

### GENERAL DESCRIPTION OF THE DRAWINGS

For a more complete understanding of the present invention and additional objects and advantages thereof, reference is now made to the following detailed description, which is to be read together with the accompanying drawings, in which the same reference designations pertain to the same parts in the various figures, and in which:
Figure 1 schematically illustrates a vehicle according to one embodiment of the invention;
Figure 2 schematically illustrates a device in the vehicle shown in Figure 1 according to one embodiment of the invention;
Figure 3a schematically illustrates a vehicle, according to one aspect of the invention;
Figure 3b schematically illustrates a vehicle according to one aspect of the invention;
Figure 3c schematically illustrates an airbag configuration according to one aspect of the invention;
Figure 3d schematically illustrates an airbag configuration according to one aspect of the invention;
Figure 4a schematically illustrates a flow diagram of a method according to one embodiment of the invention;
Figure 4b schematically illustrates, in greater detail, a flow diagram of a method according to one embodiment of the invention; and
Figure 5 schematically illustrates a computer according to one embodiment of the invention.

### DETAILED DESCRIPTION OF THE FIGURES

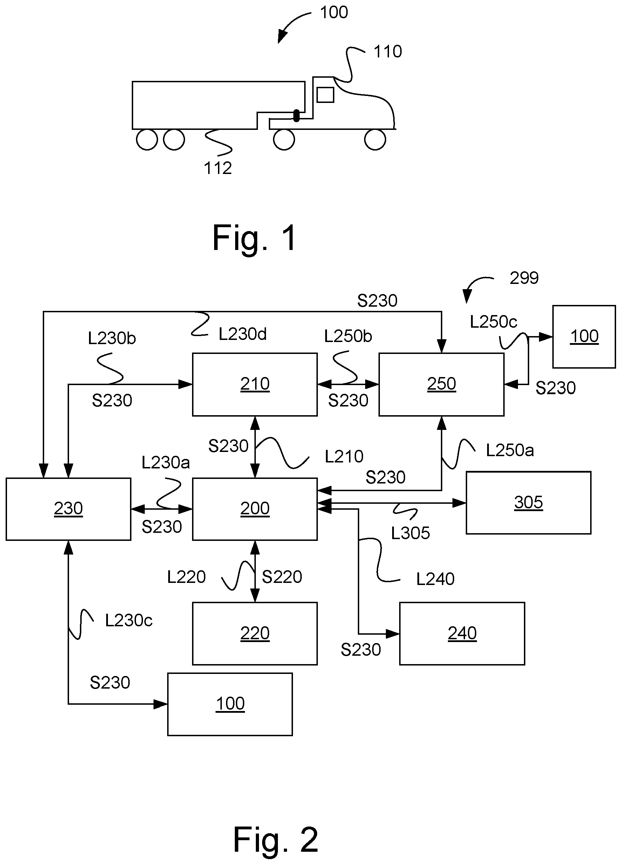

A vehicle convoy is defined as a number of vehicles that are functioning as a unit. Each vehicle that belongs to the vehicle convoy is steered automatically in the longitudinal direction, and the vehicles communicate with one another via a wireless network.
A side view of a vehicle 100 that can be included in a vehicle convoy comprising at least two vehicles is shown with reference to Figure 1. The exemplary vehicle 100 consists of a tractor 110 and a trailer 112. The vehicle 100 can be a heavy vehicle, such as a goods vehicle or a bus. The vehicle 100 can alternatively be a car. "Trailer" refers to both towed vehicles and trailers that are coupled to the tractor. The vehicle 100 can consist of a tractor and more than one trailer. The exemplary vehicle 100 pertains to any arbitrary vehicle included in a vehicle convoy, and can also pertain to a lead vehicle and a trail vehicle.

The term "link" refers herein to a communication link, which can be a physical line, such as an opto-electronic communication line, or a non-physical line, such as a wireless connection, e.g. a radio or microwave line.

The term "vehicle convoy" refers herein to a number of vehicles functioning as a unit, e.g. goods vehicles that are being driven one after another with spacing that is below a predetermined value, e.g. 25 meters or 10 meters. This spacing is a maximum distance at which reduced air resistance of a trail vehicle can be achieved, and where this distance depends upon the size and shape of the vehicles. The distance can also be measured in the form of time windows between the vehicles.

A device 299 in the vehicle 100 is shown with reference to Figure 2. The device 299 can be arranged in the tractor 110, while certain parts of the device 299, such as an airbag configuration, can be arranged on the trailer 112.

The vehicles that are included in a vehicle convoy can all be equipped with the device 299. The vehicle convoy comprises at least two vehicles, of which at least one vehicle is a vehicle in front (lead vehicle) and at least one vehicle is a trail vehicle. The lead vehicle can be a vehicle that is driving first in the vehicle convoy, but the lead vehicle can also be any arbitrary vehicle that is farther back in the vehicle convoy and is being followed by at least one trail vehicle. In the event that the vehicle in front is not a lead vehicle, said vehicle in front can in turn have any arbitrary number of vehicles ahead of it. A trail vehicle can also consist of a single vehicle that catches up to a lead vehicle, where said front vehicle is, for example, the last vehicle in a vehicle convoy. But the invention can also pertain to two separate vehicles that are not included in a coordinated vehicle convoy, but temporarily come to constitute a vehicle convoy because a trail vehicle catches up to a vehicle up ahead so as to temporarily constitute a vehicle convoy in order to benefit from the advantages that this confers.

A vehicle convoy thus pertains to vehicles that are included in a coordinated controlled vehicle convoy, as well as vehicles that temporarily come to constitute a vehicle convoy, for example when a trail vehicle catches up to a vehicle up ahead.

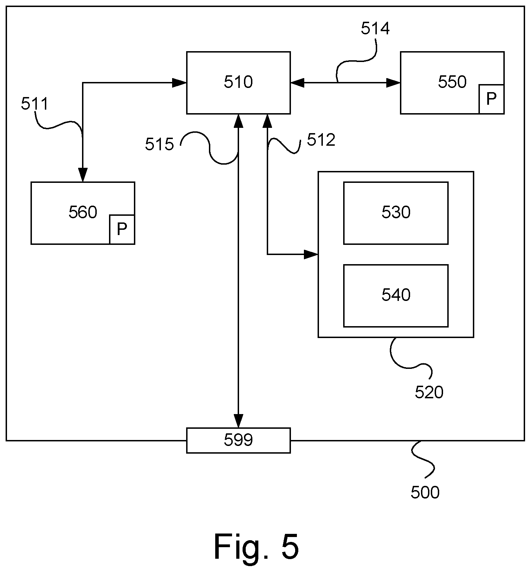

The device 299 comprises a control unit 200. The control unit 200 comprises electronics and software that are described in greater detail with reference to Figure 5.

The control unit 200 is arranged so as to sense ambient conditions and determine driving characteristics of the vehicle 100 by means of suitable elements. The control unit 200 is arranged so as to determine, by means of suitable elements, a collision risk with respect to the host vehicle or for vehicles included in a vehicle convoy.

The control unit 200 is arranged so as to identify, by means of suitable elements, an actual collision involving the host vehicle or vehicles included in a vehicle convoy. The control unit 200 is arranged so as to determine, by means of suitable elements, collision parameters concerning said collision, such as relative velocities between colliding vehicles, the masses of said colliding vehicles, etc. A basis for controlling the method according to the invention is identified thereby. The control unit 200 is arranged so as to estimate, by means of suitable elements, a collision process, including an estimate of how the colliding vehicles will behave during an upcoming collision in terms of, for example, the positioning of the host vehicle, the mutual positioning of the vehicles, changes in the directions of movement of the vehicles, velocity changes of the vehicles, the duration configuration, etc. These parameters can also be referred to as collision parameters. In those cases where the vehicles also include trailers, collision parameters will also consist of the changes in the torsional angle between tractor and trailer, or the changes in the torsional angle of the coupling between two trailers.

The control unit 200 is arranged so as to continuously detect, by means of suitable elements, an actual collision process, based on the collision parameters. Said airbag configurations can thus be controlled in real time according to one aspect of the present invention.

The control unit 200 is arranged so as to transfer said sensed ambient surroundings, determined driving characteristics and determined collision parameters by means of a wireless communication network common to at least two vehicles, e.g. a lead vehicle and a trail vehicle. The control unit 200 of one vehicle can be arranged so as to forward said transferred information to at least one trail vehicle and/or at least one lead vehicle. The control unit 200 is adapted so as to determine the appropriate control of a suitable airbag configuration for the host vehicle and/or said at least one additional vehicle in the vehicle convoy on the basis of said ambient conditions and/or said driving characteristics and/or collision parameters for said lead vehicle or for a vehicle included in the vehicle convoy. The control unit 200 is adapted so as to automatically control said suitable airbag configuration. The control unit 200 is also arranged so as to forward said transferred information to vehicles that temporarily constitute a vehicle convoy, where said vehicles are equipped with a wireless communication network. In those cases in which the vehicle convoy consists of more than two vehicles, information can thus be sent to both all lead and all trail vehicles.

A computer device 210 is arranged for communication with the first control unit 200 via a link L210. The computer device 210 can be removably connected to the first control unit 200. The computer device 210 can be arranged so as to powered by means of a battery already present in the vehicle, such as a 24V battery, which are often present on modern heavy vehicles. The computer device 210 can be a control unit external to the vehicle 100. The computer device 210 can be a conventional portable computer. The computer device 210 can be arranged so as to perform the method steps according to the invention. The computer device 210 can be used to load software over to the control unit 200, particularly software for performing the innovative method. The computer device 210 can alternatively be arranged for communication with the first control unit 200 via an internal network in the vehicle. The computer device 210 can be arranged so as to perform essentially the same functions as the first control unit 200, such as controlling the triggering of an airbag configuration controllably arranged for an external effect, with which airbag configuration at least one of said vehicles in the vehicle convoy is equipped for controlling an estimated collision process.

A navigation unit 220 is arranged for communication with the control unit 200 via a link L220. The navigation unit 220 is arranged so as to continuously determine a prevailing position of the vehicle 100. The navigation unit 220 is arranged so as to determine a prevailing velocity of the vehicle 100. The navigation unit 220 is arranged so as to continuously send signals S220 containing information about a prevailing position of the vehicle 100 to the control unit 200 via the link L220. The navigation unit 220 can consist, for example, of a GNSS unit.

The control unit 200 is arranged so as to continuously determine, by means of suitable elements, information containing data about the prevailing position, velocity, velocity changes, direction of travel and/or changes in direction of travel of the vehicle. The control unit 200 is arranged so as to continuously determine, by means of suitable elements, information containing data about the prevailing position, velocity, velocity changes direction of travel and/or changes in direction of travel of the vehicle during an accident. The control unit 200 is arranged so as to continuously determine, by means of suitable elements, information containing data about the prevailing intended velocity, intended velocity changes, intended direction of travel and/or intended changes in direction of travel of the vehicle. Said data are also referred to as driving characteristics. In those cases where the vehicles consist of trailers, the driving characteristics will also consist of a torsional angle α of the coupling between tractor and trailer, or a torsional angle α of the coupling between two trailers. In the event of a collision, this angle α will change, which can result in a so-called jackknife effect arising between the vehicles. The torsional angle α can, for example, be determined in that the control unit 200 compares the orientation of tractor and trailer, and if the orientation does not deviate, i.e. tractor and trailer are in line, then the torsional angle α equals 0°. Information about the orientation of tractor and trailer are obtained from, for example, the navigation unit 220. The torsional angle α can also be determined by means of, for example, accelerometers.

Said driving characteristics can be communicated automatically from a lead vehicle to at least one trail vehicle, but also from a trail vehicle to at least one lead vehicle. A control system in a vehicle in the vehicle convoy can thus receive said data and automatically control, e.g. the engine, transmission and/or brake system on the basis of said information. A control system in a vehicle in the vehicle convoy can thus obtain said data and automatically control an airbag configuration on the basis of said information. Because the information can be transferred in both directions, i.e. from lead vehicles to trail vehicles and from trail vehicles to lead vehicles, all the vehicles in a vehicle convoy can obtain knowledge of said data.

The control unit 200 is arranged so as to continuously determine, by means of suitable elements, information comprising data about ambient conditions. Said ambient conditions can comprise at least one of the parameters comprising the traffic situation, including elements of risk, roadway characteristics, climate characteristics and road markings.

Said ambient conditions can be communicated automatically from at least one lead vehicle to at least one trail vehicle, but also from at least one trail vehicle to at least one lead vehicle. A control system in a vehicle can thus obtain said data and automatically control, e.g. the engine, transmission and/or brake system on the basis of said information. A control system in a vehicle in the vehicle convoy can thus obtain said data and automatically control an airbag configuration on the basis of said information.

Said driving characteristics, ambient conditions and/or collision parameters can be communicated between the vehicles in the vehicle convoy essentially simultaneously.

A sensor configuration 230 is arranged for communication with the control unit 200 via a link L230a. The sensor configuration 230 is arranged so as to continuously sense ambient conditions. The sensor configuration 230 is arranged so as to continuously determine driving characteristics of the vehicle. The sensor configuration 230 is arranged so as to continuously determine collision parameters. The sensor configuration 230 is arranged so as to continuously generate signals S230 containing said ambient conditions and/or driving characteristics and/or collision parameters. The sensor configuration 230 is arranged so as to continuously send a signal S230 containing said information to the control unit 200 via the link L230a. According to one example, the control unit 200 is arranged so as to send said signal S230 on to at least one trail vehicle by means of a communication element 250, but also arranged so as to send said signal S230 to at least one lead vehicle by means of the communication element 250.

According to one embodiment, the sensor configuration 230 is arranged so as to continuously send a signal S230 containing said information to the communication element 250 via a link L230d. The communication elements 50 is arranged so as to send said signal S230 on to at least one trail vehicle in the vehicle convoy via a link L250c, but also arranged so as to send said signal S230 on to at least one lead vehicle in the vehicle convoy via a link L250c.

According to one embodiment, the sensor configuration 230 is arranged so as to continuously send a signal S230 containing said information directly to at least at least one trail vehicle or at least one lead vehicle via a link L230c. According to one alternative embodiment, said sensor configuration 230 is arranged so as send signals S230 containing said information from a vehicle to the computer 210 via a link L230b in real time. Said sensor configuration 230 is thus arranged so as to transfer said information directly to said computer 210 via the link L230b in real time. According to this embodiment, signals S230 containing said information are thus not sent directly to the control unit 200 for forwarding to at least one trail vehicle or to at least one lead vehicle. According to this embodiment, signals S230 containing said route information are thus not sent directly to said at least one trail vehicle or to at least one lead vehicle.

Said computer 210 is thus arranged so as to perform at least a part of the method according to the invention on the basis of said signal S230, e.g. determining instructions.

According to this embodiment, the computer 210 is arranged so as to forward said signals S230 to the communication element 250 via a link L250b. The computer 210 is alternatively arranged so as to forward said signals S230 to the communication element 250 via the control unit 200, i.e. via the link L210 and a link L250a. An alternative means is thus obtained of transferring the signal S230 from, for example, a vehicle to at least one additional vehicle in the vehicle convoy, which can consist of at least one trail vehicle or at least one lead vehicle.

According to one alternative embodiment, said sensor configuration 230 is arranged so as to transfer said information from a vehicle to at least one trail vehicle or to at least one lead vehicle in real time. According to this embodiment, signals S230 containing said route information are thus not sent to the control unit 200 or said computer 210 for forwarding to at least one trail vehicle and/or at least one lead vehicle.

The control unit 200 is adapted so as to determine instructions on the basis of said ambient conditions and/or said driving characteristics and/or collision parameters. Said instructions can thus be determined by any of said vehicles that are included in said vehicle convoy.

The control unit 200 is adapted so as to determine the appropriate forward travel of a vehicle that is being driven as a lead vehicle in the vehicle convoy on the basis of said ambient conditions and/or said driving characteristics and/or said collision parameters of said lead vehicle. The control unit 200 is arranged so as to communicate data concerning said determined appropriate forward travel in an appropriate manner to at least one trail vehicle in the vehicle convoy. The trail vehicles can thus be controlled automatically on the basis of said determined appropriate forward travel. Said appropriate forward travel can comprise velocity, velocity changes, direction of travel and/or changes in direction of travel. Said appropriate forward travel can comprise controlling the vehicle in such a way that an imminent collision results in minor injuries and damage to people, vehicles and objects being reduced, minimized or avoided. Said control unit 200 is correspondingly adapted so as to determine the appropriate forward travel of a vehicle that is being driven ahead of at least one trail vehicle in the vehicle convoy on the basis of said ambient conditions and/or said driving characteristics and/or said collision parameters of said trail vehicle. The control unit 200 is arranged so as to communicate data concerning said determined appropriate forward travel in a suitable manner to at least one vehicle in the vehicle convoy. The lead vehicles can thus be controlled automatically on the basis of said determined appropriate forward travel. Said appropriate forwards travel can comprise velocity, velocity changes, direction of travel and/or changes in direction of travel.

According to one embodiment, a control unit in a vehicle that is being driven behind said lead vehicle in the vehicle convoy is adapted so as to determine the appropriate forward travel of the vehicle on the basis of data concerning said ambient conditions and/or said driving characteristics and/or collision parameters. Said trail vehicle can thus be controlled automatically on the basis of said determined appropriate forward travel.

According to another embodiment, a control unit in a vehicle that is being driven ahead of said trail vehicle in the vehicle convoy is adapted so as to determine the appropriate forward travel of the vehicle on the basis of data concerning said ambient conditions and/or said driving characteristics and/or collision parameters. Said lead vehicle can thus be controlled automatically on the basis of said determined appropriate forward travel.

Said sensor configuration 230 can comprise suitable sensors. Said sensor configuration 230 can comprise a suitable number of sensors. Said sensor configuration 230 can comprise a suitable number of different sensors. Said sensor configuration can comprise a camera. Said sensor configuration 230 can be a video camera. Said sensor configuration 230 can be a webcam.

According to one embodiment, said sensor configuration 230 comprises a plurality of cameras, such as video cameras. Said plurality of cameras can be adjusted so that they continuously film various fields of view in order to sense ambient conditions, which ambient conditions can be transmitted to at least one trail vehicle or one lead vehicle. Said fields of view can be at least partly overlapping.

According to one embodiment, said sensor configuration 230 comprises a radar unit for determining the presence of external objects and associated distances and/or distance changes with respect to the vehicle and said objects. The radar unit can be arranged so as to continuously determine a distance to a lead vehicle and/or trail vehicle. A distance to a lead vehicle can thus be set automatically, whereupon a control system in the vehicle can automatically control the operation of the vehicle so that a desired distance forward to a lead vehicle is achieved.

According to one embodiment, said sensor configuration 230 comprises an ultrasound unit for determining the presence of external objects and associated distances and/ distance changes with respect to the vehicle and said objects. The ultrasound unit can be arranged so as to continuously determine a distance to a lead vehicle and/or a trail vehicle.

According to one embodiment, said sensor configuration 230 comprises a laser unit for determining the presence of external objects and associated distances and/or distance changes with respect to the vehicle and said objects. The laser unit can be arranged so as to continuously determine a distance to a lead vehicle and/or trail vehicle.

According to one embodiment, said sensor configuration 230 comprises an IR camera for determining the presence of external objects and associated distances and/or distance changes with respect to the vehicle and said objects. The IR camera can be arranged so as to continuously determine a distance to a lead and/or trail vehicle.

The control unit 200 contains an analysis program for determining said ambient conditions on the basis of information identified by said sensor configuration. Said analysis program can be an image-processing program.

Said sensor configuration 230 can comprise suitable sensors for determining driving characteristics. Examples of such sensors can include steering angle sensors, throttle position sensors, brake pedal sensors, velocity sensor etc.

Said sensor configuration 230 can comprise suitable sensors for determining collision parameters. Examples of such sensors can include steering angle sensors, throttle position sensors, brake pedal sensors, velocity sensor etc.

According to one example, the control unit 200 can determine said collision parameters on the basis of information stored in a memory therein. Said information can comprise data concerning the mass and configuration of the vehicle.

The control unit can determine said ambient conditions and said driving characteristics on the basis of data determined by said sensor configuration 230.

Presentation elements 240 are arranged for communication with the control unit 200 via a link L240. The presentation elements 240 can comprise a display screen. The presentation elements 240 are arranged so as to continuously receive transmitted signals S230 containing route information, e.g. in the form of a video stream. The presentation elements 240 can be arranged so as to display said received video stream in said trail vehicles in real time, so that at least one field of view accessible in said lead vehicle is continuously made accessible in said trail vehicle.

According to one embodiment, the presentation elements 240 can be arranged so as to display a plurality of video feeds simultaneously, in different windows on the display screen. A driver in a trail vehicle can thus select, by means of suitable elements, which video streams he wishes to have displayed. The sizes of the windows for the respective received video streams from the respective fields of view of said lead vehicle can be adjusted in an appropriate manner.

According to the invention, the display device 240 is provided, e.g. disposed in an instrument panel in a cab of the vehicle. The display elements 240 are arranged so as to display a stream of images in real time so that at least one field of view accessible to the lead vehicle 100 is continuously accessible in the trail vehicle in which the driver is located.

Said presentation elements 240 can comprise a removably connected display screen. The screen can be a touchscreen. Said presentation elements 240 can constitute an integrated component of the vehicle instrument panel or controls section.

According to one example in which the trail vehicle is being driven by means of automatic cruise control, the driver can thus better understand why control systems on the vehicle are automatically changing a prevailing velocity and/or direction of travel of the vehicle and/or activating an onboard airbag configuration before or during a collision.

Said presentation elements 240 can comprise a loudspeaker for presenting instructions concerning the forward travel of the vehicle in the form of audio signals or synthesized speech. Said instructions can be determined by a lead vehicle or a trail vehicle in the vehicle convoy. Said instructions can be determined on the basis of said ambient characteristics and/or said driving characteristics and/or collision parameters.

The control unit 200 is arranged with at least one airbag configuration 305 via a link L305. The control unit 200 is arranged so as to activate and trigger said airbag configuration 305. The control unit 200 is arranged so as to control the triggering of said airbag configuration 305 in an appropriate manner according to the invention.

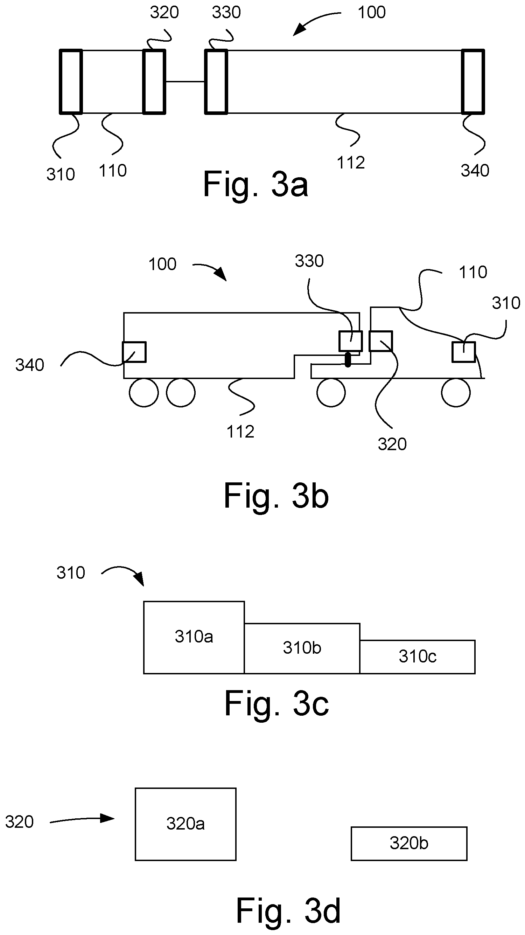

Said airbag configuration can comprise a suitable number of separate airbag elements, including said airbags. Examples of airbag configurations with airbags are described with reference to Figures 3a-3d.

Said airbag configuration 305 can be pre-existingly disposed on said vehicle 100 in an appropriate location, such as at the front of the tractor 110, at the rear of the tractor 110, at the front of the trailer 112 and/or at the rear of the trailer 112.

The control unit 200 is adapted so as to control, in the event of a identified collision risk, the triggering of an airbag configuration 305 controllably arranged for an external effect, with which airbag configuration at least one of said vehicles in the vehicle convoy is equipped for controlling a collision process.

Figure 3a schematically illustrates a vehicle 100 in plane view, according to one aspect of the invention. Said vehicle 100 comprises a tractor 110 and a trailer 112. Said vehicle 100 is equipped with four airbag configurations 305. A first airbag configuration 310 is mounted on a front end of the tractor 110. A second airbag configuration 320 is mounted on a rear end of the tractor 110. A third airbag configuration 330 is mounted on a front end of the trailer 112. A fourth airbag configuration 340 is mounted on a rear end of the trailer 112.

Said first airbag configuration 310 is arranged so as to be controllably triggerable for an external effect. Said first airbag configuration 310 is arranged for an external effect.

Said second airbag configuration 320 is arranged so as to be controllably triggerable for an external effect. Said second airbag configuration 320 is arranged for an external effect.

Said third airbag configuration 330 is arranged so as to be controllably triggerable for an external effect. Said third airbag configuration 330 is arranged for an external effect.

Said fourth airbag configuration 340 is arranged so as to be controllably triggerable for an external effect. Said fourth airbag configuration 340 is arranged for an external effect.

Said vehicle 100 can be arranged with an airbag configuration in an appropriate manner in a suitable location.

Figure 3b schematically shows a side view of the vehicle that is shown in Figure 3a, according to one aspect of the invention;

The positions of said first airbag configuration 310, second airbag configuration 320, third airbag configuration 330 and fourth airbag configuration 340 are depicted schematically here.

Said control unit 200 is arranged so as to control, where appropriate, the activation of at least one of the airbag configurations. Said control unit 200 is arranged so as to control, where appropriate, the triggering of at least one of the airbag configurations. Said control unit 200 is arranged so as to control, where appropriate a degree of inflation and/or a change in the inflation of at least one of the airbag configurations.

Said airbag configurations can be of appropriate performance capacity. Said airbag configurations can be of suitable material and size. Size refers her to both the size in an untriggered state and the size in a triggered state. Means included in the airbag configuration can consist of explosives that are customarily used in airbags, but can also consist of compressed air that is available in the vehicle.

Figure 3c schematically illustrates an airbag configuration 310 according to one aspect of the invention. It should be pointed out that the airbag configurations 320, 330 and 340 can also be designed in a similar manner. Here only the first airbag configuration 310 is presented as an example.

Said airbag configuration 310 here comprises three separate airbags, namely a first airbag 310a, a second airbag 310b and a third airbag 310c.

Said first airbag 310a, second airbag 310b and third airbag 310c are individually controllable by means of said control unit 200. Said airbags can thus, where applicable, be inflated in the desired manner to control said collision process. The airbags in the first airbag configuration 310 can thus be controlled so as to maintain a common essentially longitudinal orientation of said vehicles in said collision.

It should be pointed out that the airbags in at least one of said first, second, third and fourth airbag configurations can be controlled in similar fashion.

Said first, second, third and fourth airbag configurations can be triggered sequentially or essentially simultaneously.

Said first airbag 310a, second airbag 310b and third airbag 310c can be triggered sequentially or essentially simultaneously.

In those cases where said airbags are triggered sequentially, the sequence in which the airbags are triggered can vary. Said control unit 200 is arranged so as to control, where applicable, a degree of inflation and/or a change in the inflation of at least one of the airbag configurations. This control depends upon the location of the part of the vehicle 100 that the control unit 200 considers will be involved in the collision, and the control thus occurs so as to protect the exposed parts of the vehicle. The control unit 200 can make this determination based upon information from, for example, said sensor configuration 230. Using information from the camera and radar unit of a trail vehicle, a determination is made as to the part of the lead vehicle at which the collision will occur. Said airbag configuration of the vehicle 100 can also comprise pressure sensors that sense which part of said airbag configuration is being subjected to increased pressure, and that part of the airbag configuration will be activated.

An airbag configuration of the vehicle 100 can be designed in an appropriate manner with a suitable number of airbags, such as 1, 2, 3, 4, 5, or 10 airbags.

According to this example, all the airbags in the first airbag configuration 310 are triggered, but inflated with air to various degrees. Said airbag configuration is thus triggered so as to create a contact profile that forms an angle with the transverse direction of the vehicle 100.

Figure 3d schematically illustrates an airbag configuration 320, according to one aspect of the invention.

It should be pointed out that the airbag configurations 310, 330 and 340 can be designed in a similar way. Here only the second airbag configuration 320 is provided as an example.

Said airbag configuration 320 thus comprises two separate airbags, namely a first airbag 320a and a second airbag 320b.

Said first airbag 320a and second airbag 320b are individually controllable by means of said control unit 200. Said airbags can thus, where applicable, be inflated in the desired manner for controlling said collision process. The airbags in the second airbag configuration 320 can thus be controlled so as to maintain an essentially mutual longitudinal orientation of said vehicle during said collision. Said first airbag 320a and second airbag 320b can thus prevent a so-called jackknife effect by activating airbags between the vehicle cab of the tractor 110 and the trailer 112. According to one example, said third airbag configuration 330 can also advantageously be activated so as to further contribute to preventing a jackknife effect, whereupon the maintaining of an essentially mutual longitudinal orientation of said vehicle during said collision can be achieved.

Said first airbag 320a and second airbag 320b can be triggered sequentially or essentially simultaneously.

According to this example, both the first airbag 320a and the second airbag 320b in the second airbag configuration 320 are triggered, but inflated with air to different degrees.

According to another example of the invention, the control of said airbags can be controlled by means of different pressures in said airbags. The way in which the pressure is to be distributed between the relevant airbags is based on which part of the vehicle the control unit 200 determines will be exposed during a collision. The ability to vary the pressure distribution between the airbags affords the advantage of enabling control of which part of the airbag is to be inflated most. Variable cushioning is thereby achieved between the contact surface of the vehicles, and ensures that the contact surface is conformed so that a jackknife effect does not occur, or so that the vehicles do not bump one another off the road when a collision occurs.

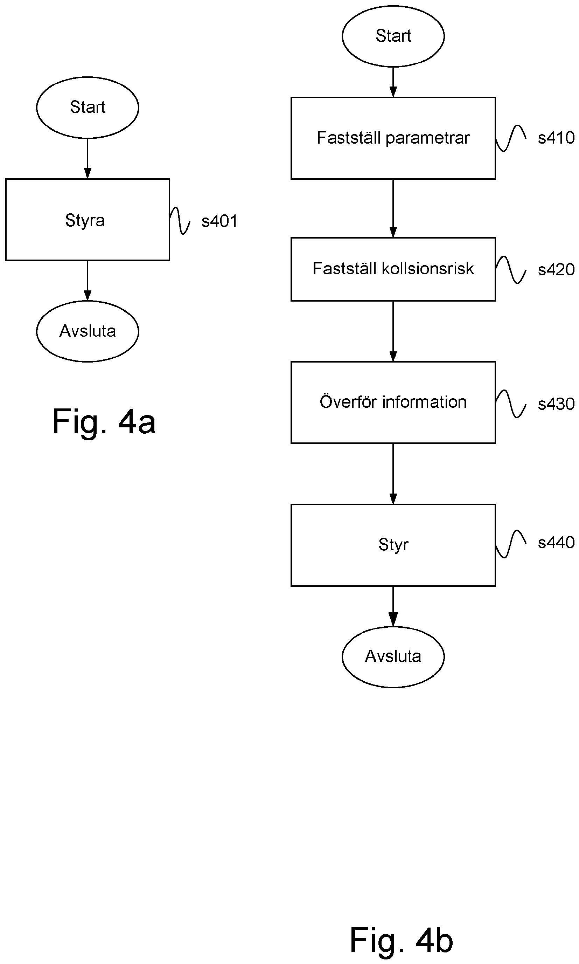

Figure 4a schematically illustrates a flow diagram of a method for controlling a collision process involving at least two vehicles, of which at least one vehicle is a lead vehicle and at least one vehicle is a trail vehicle, according to one embodiment of the invention. The method comprises a first method step s401. The step s401 comprises:
- controlling, in the event of an identified collision risk, the triggering of an airbag configuration controllably arranged for an external effect, with which airbag configuration at least one of said vehicles is equipped for controlling said collision process.
The method is concluded after the step s401.

Figure 4b schematically illustrates a flow diagram of a method for controlling a collision process in a vehicle convoy containing at least two vehicles, of which at least one vehicle is a lead vehicle and at least one vehicle is a trail vehicle, according to one embodiment of the invention.

The method comprises a first method step s410. The method step s410 comprises the step of determining parameters. Said parameters can comprise driving characteristics, vehicle properties, ambient conditions and collision parameters. This can occur by means of said sensor configuration 230. A subsequent method step s420 is performed after the method step s410.

The method step s420 comprises the step of determining whether a collision risk is present. This can occur by means of said control unit 200. Said collision risk can pertain to a collision between a lead vehicle and a vehicle that is up ahead but not included in the vehicle convoy. Said collision risk can pertain to a collision between a vehicle up ahead and an object up ahead. Said collision risk can pertain to a collision between said vehicle up ahead and a trail vehicle that is included in the vehicle convoy. Said collision risk can pertain to a collision between two or more vehicles included in the vehicle convoy. Said collision risk can pertain to a collision between at least one of the vehicles included in said vehicle convoy and an object or vehicle external to the vehicle. Said collision risk can also pertain to a collision between vehicles that temporarily constitute a vehicle convoy. A subsequent method step s430 is performed after the method step s420.

The method step s430 comprises the step of transferring information from a vehicle, for example a lead vehicle, in the vehicle convoy to at least one additional trail vehicle in the vehicle convoy. This can occur by means of the communication element 250. Said information can comprise determined driving characteristics, vehicle properties, ambient conditions, collision parameters and collision risk. Said information can also be transferred from at least one trail vehicle to at least one lead vehicle. A subsequent method step s440 is performed after the method step s430.

The method step s440 comprises the step of controlling, in the event of a identified collision risk, the triggering of an airbag configuration controllably arranged for an external effect, with which airbag configuration at least one of said vehicles is equipped for controlling said collision process. This can occur by means of said control unit 200, and where control occurs so as to be able to control which part of the airbag is to be inflated most. Said controlling of said triggering can occur on the basis of said driving characteristics, vehicle properties, ambient conditions, collision parameters and/or collision risk.

The method step s440 can comprise the step of controlling said collision process so as to maintain an essentially mutual longitudinal orientation of said vehicles during said collision.

The method step s440 can comprise the step of triggering at least certain airbag elements in the airbag configuration 305 in mutually independent simultaneous fashion, or in sequence.

The method step s440 can comprise the step of triggering said airbag configuration 305 so as to create a contact profile that forms an angle with the transverse direction of the vehicle.

The method step s440 can comprise the step of controlling said airbag configuration 305 based on at least one of the parameters comprising driving characteristics, vehicle properties, ambient conditions and collision parameters of said vehicle.

The method step s440 can comprise the step of controlling the triggering of said airbag configuration 350 based on which part of the vehicle the control unit 200 determines will be most exposed in the collision.

The method is concluded after the method step s440.

A diagram of a device 500 is shown with reference to Figure 5. The control units 200 and 210 described with reference to Fig. 2 can, in one embodiment, comprise the apparatus 500. The apparatus 500 contains a non-volatile memory 520, a data-processing unit 510 and a read/write memory 550. The non-volatile memory 520 has a first memory section 530 in which a computer program, such as an operating system, is stored in order to control the function of the apparatus 500. The apparatus 500 further contains a bus controller, a serial communication port, I/O devices, an A/D converter, a time and date input and transfer unit, an event counter and a termination controller (not shown). The non-volatile memory 520 also has a second memory section 540.

The computer program P contains routines for
- controlling, in the event of a identified collision risk, the triggering of an airbag configuration controllably arranged for an external effect, with which airbag configuration at least one of said vehicles is equipped for controlling said collision process.

The computer program P contains routines for controlling said collision process so as to maintain an essentially mutual longitudinal orientation of the colliding vehicles in said collision. The computer program P contains routines for triggering at lease certain of the airbag elements in said airbag configuration 305 in mutually independent simultaneous fashion, or in sequence. The computer program P contains routines for triggering said airbag configuration 305 so as to create a contact profile that forms an angle with the transverse direction of the vehicle. The computer program P contains routines for determining at least one of the parameters comprising driving characteristics, vehicle properties and ambient conditions of said vehicle, another vehicle included in the vehicle convoy or a vehicle that is not included in the vehicle convoy. The computer program P contains routines for controlling the triggering of said airbag configuration 305 based on at least one of the parameters comprising driving characteristics, vehicle properties and ambient conditions of said vehicle, another vehicle included in the vehicle convoy or a vehicle not included in the vehicle convoy.

The program P can be stored in an executable form or in a compressed form in a memory 560 and/or in a read/write memory 550.

When it is stated that the data-processing unit 510 performs a given function, it is to be understood that the data-processing unit 510 executes a certain part of the program that is stored in the memory 560, or a certain part of the program that is stored in the read/write memory 550.

The data-processing device 510 can communicate with a data port 599 via a data bus 515. The non-volatile memory 520 is intended to communicate with the data-processing unit 510 via a data bus 512. The separate memory 560 is intended to communicate with the data-processing unit 510 via a data bus 511. The read/write memory 550 is arranged so as to communicate with the data-processing unit 510 via a data bus 514. For example, the links L210, L220, L230a, L230b, L240, L250a, L250b and L305 can be connected to the data port 599 (see Figure 2).

When data are received at the data port 599, they are stored temporarily in the second memory section 540. Once received input data have been stored temporarily, the data-processing unit 510 is arranged so as to execute code in a manner as described above. According to one embodiment, signals received at the data port 599 contain information about an identified collision risk between a vehicle in the vehicle convoy and at least one additional vehicle, such as a vehicle included in said vehicle convoy. The signals received at the data port 599 can be used by the apparatus 500 so as to control, in the event of a identified collision risk, the triggering of an airbag configuration controllably arranged for an external effect 305, with which airbag configuration at least one of the vehicles included in a vehicle convoy is equipped for controlling said collision process

Parts of the methods described herein can be carried out by the apparatus 500 with the help of the data-processing unit 510, which runs the program stored in the memory 560 or the read/write memory 550. When the apparatus 500 runs the program, the methods described herein are carried out.

The foregoing description of the preferred embodiments of the present invention has been provided for illustrative and descriptive purposes. It is not intended to be exhaustive, or to limit the invention to the variants described. Many modifications and variations will obviously be apparent to one skilled in the art. The embodiments have been chosen and described in order to best explicate the principles of the invention and its practical applications, and to thereby enable one skilled in the art to understand the invention in terms of its various embodiments and with the various modifications that are applicable to its intended use.

## Claims

1. A method for controlling a collision process in a vehicle convoy comprising at least two vehicles, of which at least one vehicle is a lead vehicle and at least one vehicle is a trail vehicle, each of said at least two vehicles comprising a vehicle cab, the method comprising the steps of:
- automatically controlling by control systems a certain distance between said lead vehicle and said trail vehicle for lowering the air resistance for said trail vehicle;
- controlling (s401; s440), in the event of a identified collision risk as a result of an erroneous determination by said control systems, the triggering of an airbag configuration arranged for an external effect (305; 310; 320; 330; 340), said airbag configuration comprising airbag elements (310a; 310b, 310c; 320a; 320b) disposed at the front of the vehicle cab and at the rear of the vehicle cab and, if trailers are present, at the front of said trailers and at the rear of said trailers, and wherein at least one of said vehicles is equipped with said airbag configuration for controlling said collision process and wherein the control of said collision process is achieved by means of different pressures in said airbag elements (310a; 310b, 310c; 320a; 320b).

2. A method according to claim 1, comprising the step of:
- controlling (s440) said collision process so as to maintain an essentially mutual longitudinal orientation of said vehicles during said collision.

3. A method according to claim 1, comprising the step of:
- triggering (s440) at least certain of said airbag elements (310a; 310b, 310c; 320a; 320b) in mutually independent simultaneous fashion, or in sequence.

4. A method according to any of the preceding claims, comprising the step of:
- (s440) triggering said airbag configuration (305) so as to create a contact profile that forms an angle with the transverse direction of the vehicle.

5. A method according to any of the preceding claims, comprising the step of:
- controlling (s440) the triggering of said airbag configuration based on at least one of the parameters comprising driving characteristics, vehicle properties and ambient conditions of said vehicle.

6. A method according to any of the preceding claims, comprising the step of:
- controlling (s440) the triggering of said airbag configuration (305) based on which part of the vehicle a control unit (200) determines will be most exposed during the collision.

7. A device for controlling a collision process in a vehicle convoy comprising at least two vehicles, of which at least one vehicle is a lead vehicle and at least one vehicle is a trail vehicle, each of said at least two vehicles comprising a vehicle cab, said device comprising control systems adapted so as to automatically control a certain distance between said lead vehicle and said trail vehicle;
- an airbag configuration arranged for an external effect (305; 310; 320; 330; 340), said airbag configuration comprising airbag elements (310a; 310b, 310c; 320a; 320b) disposed at the front of the vehicle cab and at the rear of the vehicle cab and, if trailers are present, at the front of said trailers and at the rear of said trailers;
- a control unit (200; 210; 500) adapted so as to control, in the event of a identified collision risk as a result of an erroneous determination by said control systems, the triggering of said airbag configuration (305; 310; 320; 330; 340) for controlling said collision process and wherein the control of said collision process is achieved by means of different pressures in said airbag elements (310a; 310b, 310c; 320a; 320b).

8. A device according to claim 7, wherein the control unit is adapted so as to control said collision process in order to maintain an essentially mutual longitudinal orientation of said vehicles during said collision.

9. A device according to claim 7, wherein the control unit is adapted so as to trigger at least certain of said airbag elements in mutually independent simultaneous fashion, or in sequence.

10. A device according to any of claims 7-9, wherein the control unit is adapted so as to trigger said airbag configuration in order to create a contact profile that forms an angle with the transverse direction of the vehicle.

11. A device according to any of claims 7-10, wherein the control unit is adapted so as to control the triggering of said airbag configuration based on at least one of the parameters comprising driving characteristics, vehicle properties and ambient conditions of said vehicle.

12. A device according to any of claims 7-10, wherein the control unit is adapted so as to control the triggering of said airbag configuration based on which part of the vehicle the control unit determines will be most exposed during the collision.

13. A vehicle containing the device according to any of claims 7-12.

14. A computer program (P) for controlling a collision process in a vehicle convoy, wherein said computer program (P) contains program code for causing an electronic control unit (200; 500) or another computer (210; 500) connected to the electronic control unit (200; 500) to perform the steps according to any of claims 1-6.

15. A computer program containing a program code stored on a computer-readable medium for performing the method steps according to any of claims 1-6 when said program code is run on an electronic control unit (200; 500) or another computer (210; 500) connected to the electronic control unit (200; 500).

## Patentansprüche

1. Verfahren zum Steuern eines Kollisionsvorgangs in einem Fahrzeugkonvoi mit wenigstens zwei Fahrzeugen, von denen zumindest ein Fahrzeug ein Führungsfahrzeug ist und zumindest ein Fahrzeug ein Folgefahrzeug ist, wobei jedes der wenigstens zwei Fahrzeuge eine Fahrerkabine aufweist,
wobei das Verfahren die Schritte umfasst:
- automatisches Steuern eines bestimmten Abstands zwischen dem Führungsfahrzeug und dem Folgefahrzeug durch Steuersysteme zum Verringern des Luftwiderstands für das Folgefahrzeug,
- im Falle eines identifizierten Kollisionsrisikos als Resultat einer fehlerhaften Bestimmung durch die Steuersysteme, Steuern (s410; s440) des Auslösens einer Airbagkonfiguration, die für eine externe Wirkung (305; 310; 320; 330; 340) angeordnet ist, wobei die Airbagkonfiguration Airbagelemente (310a; 310b, 310c; 320a; 320b) aufweist, die an der Vorderseite der Fahrerkabine und an der Rückseite der Fahrerkabine angeordnet sind und, falls Anhänger vorhanden sind, an der Vorderseite der Anhänger und an der Rückseite der Anhänger, und wobei wenigstens eines der Fahrzeuge mit der Airbagkonfiguration zum Steuern des Kollisionsvorgangs ausgerüstet ist und wobei die Steuerung des Kollisionsvorgangs erreicht wird mittels unterschiedlicher Drücke in den Airbagelementen (310a; 310b, 310c; 320a; 320b).

2. Verfahren nach Anspruch 1, umfassend den Schritt des:
- Steuerns (s440) des Kollisionsvorgangs derart, dass im Wesentlichen eine gegenseitige Längsausrichtung der Fahrzeuge während der Kollision aufrechterhalten wird.

3. Verfahren nach Anspruch 1, umfassend den Schritt des:
- Auslösens (s440) zumindest bestimmter der Airbagelemente (310a; 310b, 310c; 320a; 320b) in gegenseitig unabhängiger simultaner Weise oder in Aufeinanderfolge.

4. Verfahren nach einem der vorhergehenden Ansprüche, umfassend den Schritt des:
- Auslösens (s440) der Airbagkonfiguration (305), um ein Kontaktprofil zu erzeugen, welches zur Querrichtung des Fahrzeugs einen Winkel bildet.

5. Verfahren nach einem der vorhergehenden Ansprüche, umfassend den Schritt des:
- Steuerns (s440) des Auslösens der Airbagkonfiguration basierend auf wenigstens einem der Parameter umfassend Fahreigenschaften, Fahrzeugeigenschaften und Umgebungsbedingungen des Fahrzeugs.

6. Verfahren nach einem der vorhergehenden Ansprüche, umfassend den Schritt des:
- Steuerns (s440) des Auslösens der Airbagkonfiguration (305) basierend darauf, welchen Teil des Fahrzeugs eine Steuereinheit (200) als während der Kollision am meisten betroffen ermittelt.

7. Vorrichtung zum Steuern eines Kollisionsvorgangs in einem Fahrzeugkonvoi mit wenigstens zwei Fahrzeugen, von denen zumindest ein Fahrzeug ein Führungsfahrzeug ist und zumindest ein Fahrzeug ein Folgefahrzeug ist, wobei jedes der wenigstens zwei Fahrzeuge eine Fahrerkabine aufweist,
wobei die Vorrichtung aufweist
Steuersysteme, die dazu eingerichtet sind, einen bestimmten Abstand zwischen dem Führungsfahrzeug und dem Folgefahrzeug automatisch zu steuern,
- eine Airbagkonfiguration, die für eine externe Wirkung (305; 310; 320; 330; 340) angeordnet ist, wobei die Airbagkonfiguration Airbagelemente (310a; 310b, 310c; 320a; 320b) aufweist, die an der Vorderseite der Fahrerkabine und an der Rückseite der Fahrerkabine angeordnet sind und, falls Anhänger vorhanden sind, an der Vorderseite der Anhänger und an der Rückseite der Anhänger,
- eine Steuereinheit (200; 210; 500), die dazu eingerichtet ist, im Falle eines identifizierten Kollisionsrisikos als Resultat einer fehlerhaften Bestimmung durch die Steuersysteme das Auslösen der Airbagkonfiguration (305; 310; 320; 330; 340) zum Steuern des Kollisionsvorgangs zu steuern, wobei die Steuerung des Kollisionsvorgangs erreicht wird mittels unterschiedlicher Drücke in den Airbagelementen (310a; 310b, 310c; 320a; 320b).

8. Vorrichtung nach Anspruch 7, wobei die Steuereinheit dazu eingerichtet ist, den Kollisionsvorgang solchermaßen zu steuern, dass im Wesentlichen eine gegenseitige Längsausrichtung der Fahrzeuge während der Kollision beibehalten wird.

9. Vorrichtung nach Anspruch 7, wobei die Steuereinheit dazu eingerichtet ist, wenigstens bestimmte der Airbagelemente in gegenseitig unabhängiger simultaner Weise oder in Aufeinanderfolge auszulösen.

10. Vorrichtung nach einem der Ansprüche 7 bis 9, wobei die Steuereinheit dazu eingerichtet ist, die Airbagkonfiguration derart auszulösen, dass ein Kontaktprofil erzeugt wird, welches mit der Querrichtung des Fahrzeugs einen Winkel bildet.

11. Vorrichtung nach einem der Ansprüche 7 bis 10, wobei die Steuereinheit dazu eingerichtet ist, das Auslösen der Airbagkonfiguration basierend auf zumindest einem der Parameter umfassend Fahreigenschaften, Fahrzeugeigenschaften und Umgebungsbedingungen des Fahrzeugs auszulösen.

12. Vorrichtung nach einem der Ansprüche 7 bis 10, wobei die Steuereinheit dazu eingerichtet ist, das Auslösen der Airbagkonfiguration basierend darauf zu steuern, welchen Teil des Fahrzeugs die Steuereinheit als während der Kollision am meisten betroffen bestimmt.

13. Fahrzeug enthaltend die Vorrichtung nach einem der Ansprüche 7 bis 12.

14. Computerprogramm (P) zum Steuern eines Kollisionsvorgangs in einem Fahrzeugkonvoi, wobei das Computerprogramm (P) Programmcode enthält um zu veranlassen, dass eine elektronische Steuereinheit (200; 500) oder ein anderer mit der elektronischen Steuereinheit (200; 500) verbundener Computer (210; 500) die Schritte nach einem der Ansprüche 1 bis 6 ausführt.

15. Computerprogramm enthaltend einen auf einem computerlesbaren Medium gespeicherten Programmcode zum Ausführen der Verfahrensschritte nach einem der Ansprüche 1 bis 6, wenn der Programmcode auf einer elektronischen Steuereinheit (200; 500) oder einem anderen mit der elektronischen Steuereinheit (200; 500) verbundenen Computer (210; 500) abläuft.

## Revendications

1. Procédé de contrôle d'un processus de collision dans un convoi de véhicules comprenant au moins deux véhicules, dont au moins un véhicule est un véhicule de tête et au moins un véhicule est un véhicule dans le sillage, chacun desdits au moins deux véhicules comprenant une cabine de véhicule, le procédé comprenant les étapes de :
- contrôle automatique par des systèmes de commande d'une certaine distance entre ledit véhicule de tête et ledit véhicule dans le sillage pour la réduction de la résistance à l'air dudit véhicule dans le sillage ;
- contrôle (s401 ; s440), en cas de risque de collision identifié comme résultat d'une détermination erronée par lesdits systèmes de commande, du déclenchement d'une configuration d'airbag agencée pour un effet externe (305 ; 310 ; 320 ; 330 ; 340), ladite configuration d'airbag comprenant des éléments d'airbag (310a ; 310b ; 310c ; 320a ; 320b) disposés à l'avant de la cabine du véhicule et à l'arrière de la cabine du véhicule et, si des remorques sont présentes, à l'avant desdites remorques et à l'arrière desdites remorques, et dans lequel au moins un desdits véhicules est équipé de ladite configuration d'airbag pour le contrôle dudit processus de collision et dans lequel le contrôle dudit processus de collision est obtenu au moyen de pressions différentes dans lesdits éléments d'airbag (310a ; 310b, 310c ; 320a ; 320b).

2. Procédé selon la revendication 1, comprenant l'étape de :
- contrôle (s440) dudit processus de collision afin de maintenir une orientation longitudinale essentiellement mutuelle desdits véhicules durant ladite collision.

3. Procédé selon la revendication 1, comprenant les étapes de :
- déclenchement (s440) d'au moins certains desdits éléments d'airbag (310a ; 310b, 310c ; 320a ; 320b) en mode simultané indépendant mutuellement, ou en séquence.

4. Procédé selon l'une quelconque des revendications précédentes, comprenant l'étape de :
- (s440) déclenchement de ladite configuration d'airbag (305) afin de créer un profil de contact qui forme un angle avec la direction transversale du véhicule.

5. Procédé selon l'une quelconque des revendications précédentes, comprenant l'étape de :
- contrôle (s440) du déclenchement de ladite configuration d'airbag sur base d'au moins un des paramètres comprenant des caractéristiques de conduite, des propriétés du véhicule et des conditions ambiantes dudit véhicule.

6. Procédé selon l'une quelconque des revendications précédentes, comprenant l'étape de :
- contrôle (s440) du déclenchement de ladite configuration d'airbag (305) sur base de la partie du véhicule qu'une unité de commande (200) détermine comme celle qui sera la plus exposée durant la collision.

7. Dispositif de contrôle d'un processus de collision dans un convoi de véhicules comprenant au moins deux véhicules, dont au moins un véhicule est un véhicule de tête et au moins un véhicule est un véhicule dans le sillage, chacun desdits au moins deux véhicules comprenant une cabine de véhicule, ledit dispositif comprenant des systèmes de commande adaptés afin de contrôler automatiquement une certaine distance entre ledit véhicule de tête et ledit véhicule dans le sillage ;
- une configuration d'airbag agencée pour un effet externe (305 ; 310 ; 320 ; 330 ; 340), ladite configuration d'airbag comprenant des éléments d'airbag (310a ; 310b, 310c ; 320a ; 320b) disposés à l'avant de la cabine du véhicule et à l'arrière de la cabine du véhicule, et si des remorques sont présentes, à l'avant desdites remorques et à l'arrière desdites remorques ;
- une unité de commande (200 ; 210 ; 500) adaptée afin de contrôler, en cas de risque de collision identifié comme résultat d'une détermination erronée par lesdits systèmes de commande, le déclenchement de ladite configuration d'airbag (305 ; 310 ; 320 ; 330 ; 340) pour le contrôle dudit procédé de collision et dans lequel le contrôle dudit procédé de collision est obtenu au moyen de différentes pressions dans lesdits éléments d'airbag (310a ; 310b, 310c ; 320a ; 320b).

8. Dispositif selon la revendication 7, dans lequel l'unité de commande est adaptée afin de contrôler ledit procédé de collision afin de maintenir une orientation longitudinale essentiellement mutuelle desdits véhicules durant ladite collision.

9. Dispositif selon la revendication 7, dans lequel l'unité de commande est adaptée afin de déclencher au moins certains desdits éléments d'airbag en mode simultané indépendant mutuellement ou en séquence.

10. Dispositif selon l'une quelconque des revendications 7-9, dans lequel l'unité de commande est adaptée afin de déclencher ladite configuration d'airbag afin de créer un profil de contact qui forme un angle avec la direction transversale du véhicule.

11. Dispositif selon l'une quelconque des revendications 7-10, dans lequel l'unité de commande est adaptée afin de contrôler le déclenchement de ladite configuration d'airbag sur base d'au moins un des paramètres comprenant les caractéristiques de conduite, les propriétés du véhicule et les conditions ambiantes dudit véhicule.

12. Dispositif selon l'une quelconque des revendications 7-10, dans lequel l'unité de commande est adaptée afin de contrôler le déclenchement de ladite configuration d'airbag sur base de la partie du véhicule que l'unité de commande détermine comme celle qui sera la plus exposée durant la collision.

13. Véhicule contenant une le dispositif selon l'une quelconque des revendications 7-12.

14. Programme informatique (P) pour le contrôle d'un procédé de collision dans un convoi de véhicules, dans lequel ledit programme informatique (P) comprend un code de programme pour amener une unité de commande électronique (200 ; 500) ou un autre ordinateur (210 ; 500) connecté à l'unité de commande électronique (200 ; 500) à exécuter les étapes selon l'une quelconque des revendications 1-6.

15. Produit de programme informatique contenant un code de programme stocké sur un support lisible par ordinateur pour l'exécution des étapes du procédé selon l'une quelconque des revendications 1-6 lorsque ledit code de programme est exécuté sur une unité de commande électronique (200 ; 500) ou un autre ordinateur (210 ; 500) connecté à l'unité de commande électronique (200 ; 500).
